# EUROPEAN PATENT APPLICATION

(11) **EP 0 717 218 A1**
(43) Date of publication of application: **19.06.1996**
(21) Application number: 95309101.4
(22) Date of filing: 14.12.1995
(51) Int. Cl.: F16J 15/08

(54) **Metal gasket with an annular ring**

(30) Priority: 16.12.1994 JP 313311/94; 16.12.1994 JP 313324/94
(71) Applicant: ISHIKAWA GASKET CO. LTD., Tokyo (JP)
(72) Inventor: Miyaoh, Yoshio, Adachi-ku, Tokyo (JP)
(74) Representative: Goddard, David John

(57) **Abstract**

A metal gasket of the invention is used for an internal combustion engine with a hole to be sealed. The gasket is formed of at least one metal plate for constituting the gasket, and an annular ring fixed to the metal plate. The plate includes a first hole corresponding to the hole of the engine, an annular or recessed portion surrounding the first hole, and a base portion surrounding the annular portion. The thickness of the annular portion is less than the thickness of the base portion. The annular ring is situated in and fixed to the annular portion. The total thickness of the annular portion and the annular ring is greater than the thickness of the base portion to thereby regulate and provide surface pressure around the hole of the engine.

## Description

### Background of the Invention and Related Art Statement

The present invention relates to a metal gasket with an annular ring to regulate a surface pressure around a hole to be sealed.

In a metal gasket, in order to securely seal around a hole to be sealed, a sealing device, such as a bead, is formed around the hole. In addition to the bead, a metal gasket may include a thick portion around the hole.

Especially, in an engine with a cylinder liner, as a rigidity of a cylinder head decreases, a part of the cylinder head between bolt holes may slightly bend. As a result, a sufficient surface pressure may not be obtained between the cylinder head and the cylinder liner. In order to compensate the surface pressure, a thick portion in the form of a ring may be formed around the cylinder bore above the cylinder liner.

On the other hand, thin gaskets must be used in some engines. A gasket used in this type of the engine is shown in Japanese Utility Model Publication (KOKAI) No. 61-14748, wherein a plating with a thickness of 0.03-0.05 mm is formed around a cylinder bore on a plate with a bead. The plating operates as a fire ring to protect the bead from direct contact of the combustion gas, as well. It takes, however, long time and labor to form the plating on the plate. In view of the cost, the plating is not appropriate.

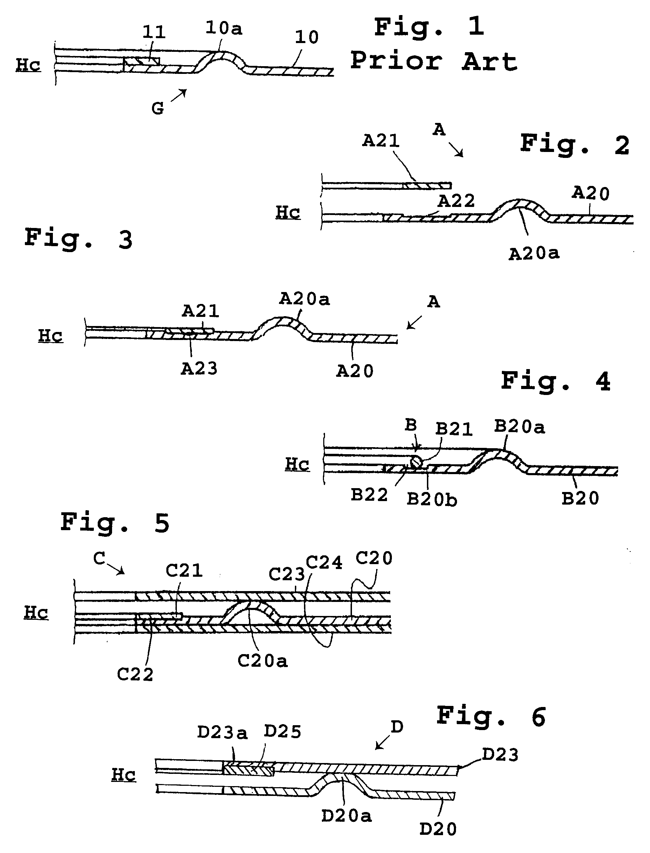

Also, it has been known that a ring plate is fixed by welding on a metal plate around a hole to be sealed, which is shown in Fig. 1. The gasket G is formed of a metal plate 10 with a bead 10a around a cylinder bore Hc, and a ring plate 11 fixed on the plate 10 around the cylinder bore. When the gasket G is situated between a cylinder head and a cylinder block (both not shown) and is tightened, a compression height of the bead 10a is determined by the thickness of the ring plate 11. Thus, the ring plate 11 operates to regulate the surface pressure of the bead 10a and to seal between the cylinder head and the cylinder block or cylinder liner.

However, in case the cylinder head is not substantially bent, or has high rigidity, when it is used, and the height required to regulate the surface pressure is low, the ring plate must be thin. In this respect, it is difficult to prepare a thin ring plate and fix it to a metal plate by welding.

The present invention has been made to obviate the above problems, and an object of the invention is to provide a metal gasket which has a thick portion around a hole to be sealed for providing an adequate surface pressure thereat.

Another object of the invention is to provide a metal gasket as stated above, wherein the thick portion can be easily and precisely formed.

Further objects and advantages of the invention will be apparent from the following description of the invention.

### Summary of the Invention

In accordance with the invention, a metal gasket is used for an internal combustion engine with a hole to be sealed. Especially, the gasket is useful for a cylinder head gasket for an engine with a cylinder liner.

The gasket is basically formed of a first metal plate for constituting a gasket, and a first annular ring. The first plate includes a first hole corresponding to the hole of the engine, an annular or recessed portion surrounding the first hole, and a base portion surrounding the annular portion and situated outside the annular portion relative to the first hole. The thickness of the annular portion is less than the thickness of the base portion.

The first annular ring is situated in and fixed to the annular portion. The total thickness of the annular portion and the first annular ring is greater than the thickness of the base portion to thereby form a thick portion around the first hole. A surface pressure around the hole of the engine is regulated by the first annular ring. The first annular ring also operates as a fire guard.

In the present invention, the portion of the first plate where the first annular ring is placed is slightly recessed. Thus, the thickness of the first annular ring need not be made so thin for projecting the first annular ring slightly beyond the outer surface of the first plate.

The first plate used in the invention may be a metal plate conventionally used in forming a metal gasket, and the thickness is generally between 0.3-0.6 mm. There is no special limitation for the thickness of the annular portion, but generally, the recess of the annular portion is less than half of the thickness of the metal plate.

The annular portion or recess may be formed on the first plate by any means, but it may be formed by a coining, etching or grinding process. The height that the first annular ring projects may be determined based on the requirement.

Preferably, the first metal plate further includes a bead in the base portion to surround the annular portion. The first annular ring projecting outwardly from the outer surface of the first plate determines the height of the bead when it is compressed. Since the first annular ring projects beyond the outer surface of the first plate, creep relaxation of the bead is prevented. Thus, the first annular ring operates as a surface pressure regulation plate for the bead.

Generally, the width of the first annular ring is the same as that of the annular portion or recess. However, the first annular ring may have a width shorter than the width of the annular portion, and a space is formed between the base portion and the first annular ring in the annular portion. Namely, a thin portion is established in the annular portion. As a result, the gasket can be easily bent at the thin portion when a force is applied at the first annular ring. This structure is especially useful when the first annular ring is located on the cylinder liner, because the annular ring may be pushed upwardly by the cylinder liner separately from the cylinder block.

In the invention, the first metal plate may be combined with a second metal plate to constitute a metal laminate gasket. A second annular ring may be located in and fixed to a second annular Portion or recess of the second plate.

In the invention, the first annular ring may be integrally formed with the annular portion of the first metal plate. In this case, the annular portion or recess is formed widely, and a part of the annular portion is bent to be situated above the rest of the annular portion. The part of the annular portion located above forms the annular ring. In this case, the annular ring can be easily formed and fixed to the first metal plate without welding.

### Brief Description of the Drawings

Fig. 1 is a section view of a part of a conventional cylinder head gasket;
Figs. 2 and 3 are explanatory section views of a part of a first embodiment of a single metal gasket of the invention;
Fig. 4 is an explanatory section view of a part of a second embodiment of a single metal gasket of the invention;
Figs. 5 and 6 are explanatory section views of parts of third and fourth embodiments of the metal laminate gaskets of the invention;
Figs. 7 and 8 are explanatory perspective views of parts of a fifth embodiment of a single metal gasket of the invention;
Fig. 9 is an explanatory section view of a part of a sixth embodiment of a single metal gasket of the invention; and
Figs. 10 and 11 are explanatory section views of parts of seventh and eighth embodiments of a metal laminate gasket of the invention.

### Detailed Description of Preferred embodiments

Referring to Figs. 2 and 3, a first embodiment A of a single metal gasket of the invention is shown. The gasket A is a cylinder head gasket and includes a plurality of cylinder bores Hc, water holes, oil holes, bolt holes and so on (not shown), as in the conventional gasket. Since the invention is directed to the structure around the cylinder bore Hc, explanation for the rest of the structure of the gasket is omitted.

As shown in Figs. 2 and 3, the gasket A is formed of a metal plate A20, and a ring plate A21. The plate A20 extends throughout an entire area to be sealed, and includes a cylinder bore Hc to be sealed, a recess A22 formed around the cylinder bore Hc and a bead A20a located around the recess A22. The ring plate A21 is situated in the recess A22 and fixed to the plate A20 by spot welding A23.

When the gasket A is formed, at first, a metal plate with the specific shape and holes therein is formed. Then, the recess A22 is formed around the cylinder bore Hc by a coining, etching or grinding process, and the bead A20a is formed by a pressing process. Thereafter, the ring plate A21 is inserted into the recess A22, and is fixed to the plate A20 by the spot welding.

The depth of the recess A22 and the thickness of the ring plate A21 are selected as required. In any situation, the ring plate A21 slightly projects outwardly from the outer surface of the plate A20 to provide surface pressure around the cylinder bore Hc and to prevent the bead A20a from being completely flattened. The surface pressure of the bead A20a is regulated by the ring plate A21.

In the invention, in order to make the ring plate A21 to slightly project outwardly from the outer surface of the plate A20, the recess A22 is formed in the plate A20. Therefore, the ring plate A21 need not be made so thin. The gasket with the ring plate slightly projecting outwardly can be made easily.

In this respect, if there is no recess, the ring plate must be made thin. In view of the fact that forming the thin ring plate and fixing it to the plate properly are very difficult, the present invention is very useful.

Fig. 4 shows a second embodiment B of a metal gasket of the invention. The gasket B uses a metal plate B20 having a bead B20a and a recess B22, as in the plate A20. In the gasket B, however, a wire ring B21 is fixed to the plate B20 in the recess B22 to form a thin portion B20b outside the wire ring B21.

When the gasket B is used, the wire ring B21 is placed above the cylinder liner (not shown), and a substantial portion of the gasket outside the wire ring B21 is located on the cylinder block. In case the cylinder liner does not precisely align with the cylinder block horizontally, the thin portion B20b can bend according to the location of the cylinder liner or the cylinder head. The gasket B operates as in the gasket A.

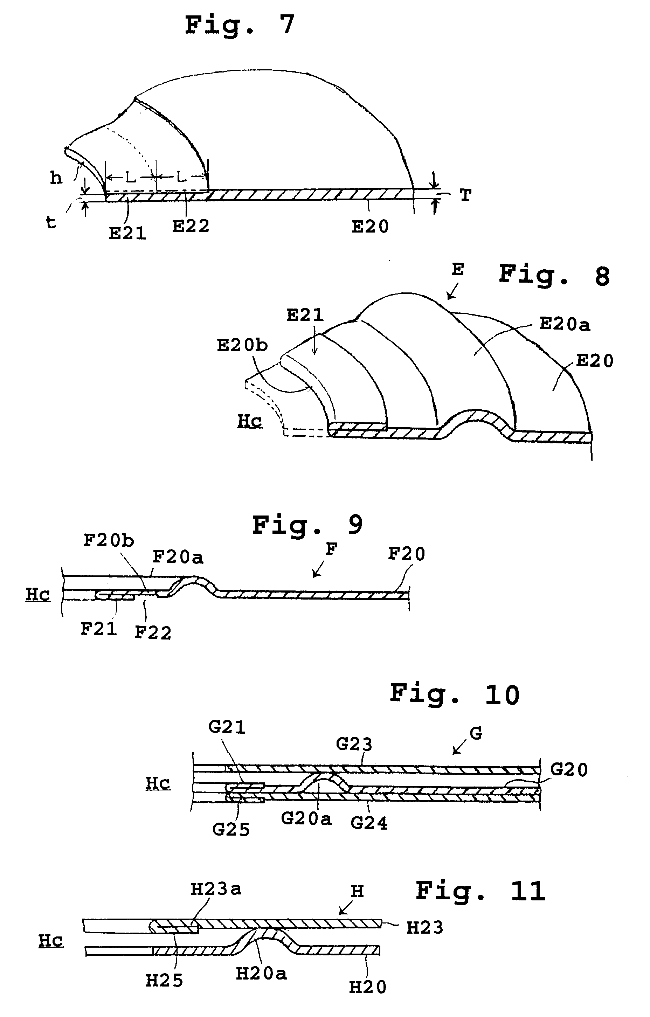

Fig. 5 shows a third embodiment C of the gasket of the invention. The gasket C is a metal laminate gasket, and includes, in addition to upper and lower plates C23, C24, a plate C20 with a bead C20a and a ring plate C21. In the gasket C, a recess C22 extends from an end facing the cylinder bore Hc. Although the upper and lower plates C23, C24 are formed, the gasket C operates similar to the gasket A.

Fig. 6 shows a fourth embodiment D of the gasket of the invention. The gasket D is a metal laminate gasket, and includes an upper plate D23 with a recess D23a at a lower side, and a plate D20 with a bead D20a. A ring plate D25 is located in the recess D23a. Since the ring plate D25 projects downwardly, the ring plate D25 operates as a surface pressure regulation plate for the bead D20a. In the gasket D, the compression ratio of the bead D20a can be regulated by the ring plate D25 formed on the upper plate D23. Also, in case the upper plate D23 is changed without changing the plate D20, i.e. spring constant of the bead D20a, the thickness of the gasket D can be easily changed.

Figs. 7 and 8 show a fifth embodiment E of the gasket of the invention. The gasket E is similar to the gasket A, but it is formed of one plate E20.

When the gasket E is formed, the plate E20 with a thickness T is prepared to have a hole h smaller than the cylinder bore Hc for a length L. An area around the hole h for a length 2 L of the plate E20 is made thin to form a recess E22 and a ring plate E21. The thin portion has a thickness t and is formed by a coining, etching or grinding process. After a bead E20a is formed on the plate E20, an inner portion of the plate E20 is turned to form the ring plate E21. A curved portion E20b defines a cylinder bore Hc. A thick portion of the gasket E at the ring plate E21 has the thickness 2t greater than the thickness T.

In the gasket E, since the ring plate E21 is integrally formed with the plate E20, the ring plate E21 can be easily formed without spot welding. Also, the thickness of the gasket at the ring plate E21 can be precisely formed and controlled. The gasket E operates as in the gasket A.

Fig. 9 shows a sixth embodiment F of the gasket of the invention. The gasket F is formed of a metal plate F20 having a bead F20a, recess F22 and ring plate F21, similar to the gasket E. In the gasket F, however, the recess F22 is formed at a side opposite to a projecting direction of the bead F20a, and a thin portion F20b is formed outside the ring plate F21.

Since the thin portion F20b is formed, when the ring plate F21 is located on the cylinder liner (not shown), the thin portion F20b can be bent easily according to the location and movement of the cylinder liner. The gasket F operates, as in the gasket B.

Fig. 10 shows a seventh embodiment G of a metal laminate gasket of the invention. The gasket G is formed of an upper plate G23, a plate G20 having a bead G20a and a ring plate G21, and a lower plate G24. The plate G20 is the same as the plate E20 or gasket E, and the plate G24 includes a ring plate G25 at a lower side of the gasket. The plate G24 is similar to the plate G20, but it does not have a bead. In the gasket G, a relatively high surface pressure is formed around the cylinder bore Hc. The gasket G operates as in the gasket D.

Fig. 11 shows an eighth embodiment H of the gasket of the invention. The gasket H is a metal laminate gasket, and includes an upper plate H23 with a recess H23a at a lower side, and a plate H20 with a bead H20a. A ring plate H25 is integrally formed with the upper plate H23 and is disposed in the recess H23a by bending or turning a portion near the cylinder bore Hc. Since the ring plate H25 projects downwardly, the ring plate H25 operates as a surface pressure regulation plate for the bead H20a. In the gasket H, the compression ratio of the bead H20a can be regulated by the ring plate H25 formed on the upper plate H23. The gasket H operates as in the gasket D.

In the gasket of the present invention, the annular ring can slightly project outwardly from the outer surface of the metal plate. Since the recess for the annular ring is formed on the metal plate, the projecting portion or annular ring can be easily and precisely formed.

While the invention has been explained with reference to the specific embodiments of the invention, the explanation is illustrative, and the invention is limited only by the appended claims.

It will be understood by those skilled in the art that the various constructional features as described above with respect to the various embodiments may be interchanged therebetween as required in any specific application of the gasket. For example, the bead F20a of Figure 9 may project outwardly towards the side where the turned annular ring F21 is situated. Similarly, the plate G23 of gasket G may be omitted where the application allows. Thus, the features as described with reference to gaskets A to H may be employed in any desired combination as dictated by any particular gasket application, the illustrated embodiments being merely examples of many possible gasket constructions within the scope of the present invention.

## Claims

1. A metal gasket for an internal combustion engine with a hole to be sealed, comprising:
a first metal plate for constituting a gasket including a first hole corresponding to the hole of the engine, an annular portion surrounding the first hole, and a base portion surrounding the annular portion and located outside the annular portion relative to the first hole, the thickness of the annular portion being less than the thickness of the base portion, and
a first annular ring situated in and fixed to the annular portion, a total thickness of the annular portion and the first annular ring being greater than the thickness of the base portion to thereby regulate and provide surface pressure around the hole of the engine.

2. A metal gasket according to claim 1, wherein said first metal plate further includes a bead in the base portion to surround the annular portion, said first annular ring preventing creep relaxation of the bead.

3. A metal gasket according to claim 2, wherein said bead projects outwardly at a side where the first annular ring is situated.

4. A metal gasket according to claim 3, wherein said first annular ring has a width as in the annular portion.

5. A metal gasket according to claim 3, wherein said first annular ring has a width shorter than the width of the annular portion, a space being formed between the base portion and the first annular ring in the annular portion to facilitate bending of the gasket thereat when a force is applied to a portion where the first annular ring is placed.

6. A metal gasket according to claim 5, wherein said first annular ring is a wire ring.

7. A metal gasket according to claim 2, further comprising a second metal plate situated above the first metal plate to constitute a metal laminate gasket.

8. A metal gasket according to claim 7, further comprising a second annular ring, said second metal plate including a second hole corresponding to the first hole and a second annular recess situated around the second hole at a side of the first metal plate, said second annular ring being situated in the second annular recess.

9. A metal gasket according to claim 1, wherein said first annular ring is integrally formed with the annular portion of the first metal plate and is situated above the annular portion.

10. A metal gasket according to claim 9, wherein said first metal plate further includes a bead in the base portion to surround the annular portion, said first annular ring preventing creep relaxation of the bead.

11. A metal gasket according to claim 10, wherein said bead projects outwardly at a side where the first annular ring is situated.

12. A metal gasket according to claim 11, wherein said first annular ring has a width shorter than the width of the annular portion, a space being formed between the base portion and the first annular ring in the annular portion to facilitate bending of the gasket thereat when a force is applied to a portion where the first annular ring is placed.

13. A metal gasket according to claim 11, further comprising a second metal plate situated under the first meal plate to constitute a metal laminate gasket and having a second hole corresponding to the first hole and a second annular recess situated around the second hole at a side opposite to the first metal plate, and a second annular ring integrally formed with the second metal plate and situated in the second annular recess.
